(19) **Europäisches Patentamt**
**European Patent Office**
**Office européen des brevets**

(11) **EP 4 760 828 A1**

(12) **EUROPEAN PATENT APPLICATION**
published in accordance with Art. 153(4) EPC

(43) Date of publication:
**17.06.2026 Bulletin 2026/25**

(21) Application number: **24870760.6**

(22) Date of filing: **25.09.2024**

(51) International Patent Classification (IPC):
*H01M 8/04992* (2016.01)   *H01M 8/04298* (2016.01)
*H01M 8/04858* (2016.01)   *H01M 8/04701* (2016.01)
*H01M 8/04746* (2016.01)

(52) Cooperative Patent Classification (CPC):
**H01M 8/04298; H01M 8/04701; H01M 8/04746;**
**H01M 8/04858; H01M 8/04992;** Y02E 60/50

(86) International application number:
**PCT/CN2024/121023**

(87) International publication number:
**WO 2025/067216 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.09.2023   CN 202311255997**

(71) Applicant: **Dalian Institute of Chemical Physics,**
**Chinese Academy of Sciences**
**Dalian, Liaoning 116023 (CN)**

(72) Inventors:
• **LIN, Yongli**
  **Dalian, Liaoning 116023 (CN)**
• **SHAO, Zhigang**
  **Dalian, Liaoning 116023 (CN)**
• **SUI, Jintao**
  **Dalian, Liaoning 116023 (CN)**
• **YU, Chengyi**
  **Dalian, Liaoning 116023 (CN)**

(74) Representative: **Proi World Intellectual Property**
**GmbH**
**Obermattweg 12**
**6052 Hergiswil, Kanton Nidwalden (CH)**

(54) **METHOD FOR CONTROLLING INTELLIGENT HEALTH MANAGEMENT OF FUEL CELL**

(57)   Provided in the present invention is a method for controlling intelligent health management of a fuel cell. The method comprises: taking, as control target values of a fuel cell, a current, a temperature, a hydrogen emission, an oxygen emission, a hydrogen reflux quantity, a hydrogen-side pressure and an oxygen-side pressure, which correspond to each of a calculated value of the total voltage of a fuel cell stack, a calculated value of a single-cell voltage mean square deviation of the fuel cell stack, a calculated value of a single-cell voltage change rate of the fuel cell stack and a calculated value of a single-cell voltage minimum amplitude of the fuel cell stack, or correspond to each of an optimized value of the total voltage of the fuel cell tack, an optimized value of the single-cell voltage mean square deviation of the fuel cell stack, an optimized value of the single-cell voltage change rate of the fuel cell stack and an optimized value of the single-cell voltage minimum amplitude of the fuel cell stack, and thus a membrane electrode is always in a "water balance" state, thereby improving the performance of cells, reducing the occurrence of cell faults, and improving the self-adaptability, reliability and stability of a fuel cell system.

**EP 4 760 828 A1**

S1: Input, into a trained nonlinear mapping model a current, a temperature a hydrogenemission, an oxygen emission, a hydrogen reflux quantity, a hydrogen-side pressure and anoxygen-side pressure of a fuel cell; and the nonlinear mapping model outputs a calculation result

↓

S2: Input the calculation result into an objective function, and search for a calculated value of the total voltage of a fuel cell stack, a calculated value of a single-cell voltage mean square deviation of the fuel cell stack, a calculated value of a single-cell voltage change rate of the fuel stack and a calculated value of a single-cell voltage minimum amplitude of the fuel stack, which correspond to the maximum value of the objective function

↓

S3: Measure the actual value of the total voltage of the fuel cell stack, the actual value of the single-cell voltage mean square deviation of the fuel cell stack, the actual value of the single-cell voltage change rate of the fuel cell stack, and the actual value of the single-cell voltage minimum amplitude of the fuel cell stack, wherein the difference value between the calculated value of the total voltage of the fuel cell stack and the actual value of the total voltage of the fuel cell stack is a first difference value, the difference value between the calculated value of the single-cell voltage mean square deviation of the fuel cell stack and the actual value of the single-cell voltage mean square deviation of the fuel cell stack is a second difference value, the difference value between the calculated value of the single-cell voltage change rate of the fuel cell stack and the actual value of the single-cell voltage change rate of the fuel cell stack is a third difference value, and the difference value between the calculated value of the single-cell voltage minimum amplitude of the fuel cell stack and the actual value of the single-cell voltage minimum amplitude of the fuel cell stack is a fourth difference value

↓

S4: Respectively determine whether the first difference value is greater than a first threshold value, whether the second difference value is greater than a second threshold value, whether the third difference value is greater than a third threshold value, and whether the fourth difference value is greater than a fourth threshold value

↓

S5: If the first difference value is less than or equal to the first threshold value, the second difference value is less than or equal to the second threshold value, the third difference value is less than or equal to the third threshold value, and the fourth difference value is less than or equal to the fourth threshold value, take, as control target values of the fuel cell, a current, a temperature, a hydrogen emission, an oxygen emission, a hydrogen reflux quantity, a hydrogen-side pressure and an oxygen-side pressure, which correspond to each of the calculated value of the total voltage of the fuel cell stack, the calculated value of the single-cell voltage mean square deviation of the fuel cell stack, the calculated value of the single-cell voltage change rate of the fuel cell stack and the calculated value of the single-cell voltage minimum amplitude of the fuel cell stack

FIG. 1

**Description**

## TECHNICAL FIELD

The present invention relates to a field of energy technology, specifically, in particular to a method for intelligent management and control of fuel cell health.

## BACKGROUND ART

Proton exchange membrane fuel cells (PEMFCs) directly convert chemical energy into electrical energy through the reaction of hydrogen with oxygen from the air or pure oxygen, which is characterized by high energy conversion efficiency, low operating noise, high reliability, and low operating temperature. PEMFCs enable low-temperature startup and zero emissions, are environmentally friendly, have simple structure, and are easy to operate. Additionally, hydrogen, as a renewable energy, is abundantly available. Therefore, PEMFCs are a truly green and environmentally friendly energy and have been increasingly applied across various new energy fields.

Fuel cells operate through membrane electrode assemblies (MEAs). Polymer electrolytes in the MEA must contain water during operation to ensure proton conductivity. However, the water content cannot be excessive, as this would block the gas diffusion layers of the MEA and affect the reaction. Therefore, it is necessary to maintain a dynamic balance of the water content within the MEA. In actual operation, numerous factors affect the water content of the MEA, especially when scaling up to the system level. The use of multiple single cells connected in series or even multiple fuel cell stacks in series and parallel further increases the difficulty of controlling the water content of each individual MEA.

Patent application CN112117475A uses a learning vector quantization neural network algorithm for fault detection in a water management subsystem, with training samples adopting parameters such as pressures and temperatures of the system's cathode and anode. Patent application CN114976133A employs a model to establish a fault-tolerant control method for fuel cell water management. It designs a flooding fault factor based on a water transport model, and then designs a fault-tolerant controller based on this factor to adjust the cathode inlet airflow to control flooding faults. In the existing technologies, models are designed for a single target variable, such as air flow rate, air pressure, or fuel cell stack temperature, establishing linear relationships or PID control models. These methods lack comprehensive consideration. In an actual fuel cell system, the water content of the MEA is affected by numerous factors acting in combination.

In view of this, the present invention provides a method for intelligent management and control for fuel cell health.

## SUMMARY

In response to the above-mentioned technical problems, the present invention provides a method for intelligent management and control for fuel cell health. The present invention primarily uses a recurrent neural network to establish a system model, which employs a differential evolution algorithm, using stack monitoring parameters as an objective function, to obtain an optimized set of input parameters to indirectly control the water content of a MEA, thereby enabling a better simulation of the fuel cell system's operation. Furthermore, by combining with an optimization algorithm, the present invention dynamically calculates optimized parameters, achieving an improved adaptive control effect.

The present invention adopts the following technical solutions:

A method for intelligent management and control of fuel cell health is provided in the present invention, including:

Input values of current, temperature, hydrogen emission, oxygen emission, hydrogen recirculation flow, hydrogen-side pressure, and oxygen-side pressure of a fuel cell into a trained nonlinear mapping model, and then the trained nonlinear mapping model output a calculation result;

Input the calculation result into an objective function, and determine, corresponding to the maximum value of the objective function, calculated values of a total voltage of a fuel cell stack, a single-cell voltage mean square deviation of the fuel cell stack, a single-cell voltage change rate of the fuel cell stack, and a single-cell voltage minimum amplitude of the fuel cell stack;

Measure actual values of the total voltage of the fuel cell stack, the single-cell voltage mean square deviation of the fuel cell stack, the single-cell voltage change rate of the fuel cell stack, and the single-cell voltage minimum amplitude of the fuel cell stack, where a difference value between the calculated value and the actual value of the total voltage of the fuel cell stack is a first difference, a difference between the calculated value and the actual value of the single-cell voltage mean square deviation of the fuel cell stack is a second difference, a difference between the calculated value and the actual value of the single-cell voltage change rate of the fuel cell stack is a third difference, and a difference between the calculated value and the actual value of the single-cell voltage minimum amplitude of the fuel cell stack is a fourth difference;

Respectively determine whether the first difference is greater than a first threshold, whether the second difference is greater than a second threshold, whether the third difference is greater than a third threshold, and whether the fourth difference is greater than a fourth threshold; and

If the first difference is less than or equal to the first threshold, the second difference is less than or equal to the second threshold, the third difference is less than or equal to the third threshold, and the fourth difference is less than or equal to the fourth threshold, take, as control target values of the fuel cell, the current, the temperature, the hydrogen emission, the oxygen emission, the hydrogen recirculation flow, the hydrogen-side pressure, and the oxygen-side pressure corresponding to each of the calculated values of the total voltage of the fuel cell stack, the single-cell voltage mean square deviation of the fuel cell stack, the single-cell voltage change rate of the fuel cell stack, and the single-cell voltage minimum amplitude of the fuel cell stack.

Further, the objective function satisfies:

$$Y = op1 \times A + (1/op2) \times B + (1/op3) \times C + (1/op4) \times D,$$

In the function, $op1$ represents the calculated value of the total voltage of the fuel cell stack, $A$ represents the first weight, $op2$ represents the calculated value of the single-cell voltage mean square deviation of the fuel cell stack, $B$ represents the second weight, $op3$ represents the calculated value of the single-cell voltage change rate of the fuel cell stack, $C$ represents the third weight, $op4$ represents the calculated value of the single-cell voltage minimum amplitude of the fuel cell stack, and $D$ represents the fourth weight.

Further, if the first difference is greater than the first threshold, adjust the first weight to a first optimized weight according to a fuzzy control algorithm;

If the second difference is greater than the second threshold, adjust the second weight to a second optimized weight according to the fuzzy control algorithm;

If the third difference is greater than the third threshold, adjust the third weight to a third optimized weight according to the fuzzy control algorithm;

If the fourth difference is greater than the fourth threshold, adjust the fourth weight to a fourth optimized weight according to the fuzzy control algorithm.

Further, an optimization objective function is formed when at least one of the first weight, the second weight, the third weight, and the fourth weight of the objective function is changed;

Determine optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack corresponding to the maximum value of the optimization objective function; and

Take, as control target values of the fuel cell, the current, the temperature, the hydrogen emission, the oxygen emission, the hydrogen recirculation flow, the hydrogen-side pressure, and the oxygen-side pressure corresponding to each of optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack.

Further, the nonlinear mapping model includes an input layer, an intermediate layer, and an output layer connected in sequence. Additionally, the intermediate layer includes a plurality of neurons, and the intermediate layer is connected to a hidden layer.

Further, the training of the nonlinear mapping model includes:

Provide a data set;

Normalize the data set to obtain a processed data set; and

Input the processed data set into the nonlinear mapping model, and obtain the trained nonlinear mapping model after a preset number of iterations.

Further, a weight update learning rate of the input layer ranges from 0.2 to 0.3, the weight update learning rate of the output layer ranges from 0.2 to 0.4, and the weight update learning rate of the hidden layer ranges from 0.1 to 0.2.

Compared with existing technologies, the present invention has the following advantages:

The method for intelligent management and control of fuel cell health provided in the present invention, targets the current corresponding to each of the calculated values of the total voltage of the fuel cell stack, the single-cell voltage mean square deviation of the fuel cell stack, the single-cell voltage change rate of the fuel cell stack, and the single-cell voltage minimum amplitude of the fuel cell stack, enabling the fuel cell to operate under reasonable working conditions to avoid faults such as "membrane drying" or "flooding" in the MEA of the fuel cell. When a decline in health or even a fault occurs, the optimization objectives are adjusted and operation conditions are modified, which target the optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack, enabling the MEA to reach a new "water balance" state, thereby improving fuel cell performance, reducing fuel cell faults, and enhancing the adaptability, reliability, and stability of the fuel cell system.

## BRIEF DESCRIPTION OF THE DRAWINGS

The drawings used in the embodiments or the prior art will be briefly described herein to more clearly describe the embodiments of the present application or the technical solutions in the prior art. Apparently, the following described drawings are merely some embodiments of the present invention. For those ordinary skilled in the art, other drawings can also be obtained according to the provided drawings without creative work.

FIG. 1 is a schematic flow diagram of an embodiment of the method for intelligent management and control of fuel cell health provided by the present invention.
FIG. 2 is a schematic flow diagram of another embodiment of the method for intelligent management and control of fuel cell health provided by the present invention.
FIG. 3 is a schematic flow diagram of yet another embodiment of the method for intelligent management and control of fuel cell health provided by the invention.

## DETAILED DESCRIPTION OF THE EMBODIMENTS

To enable those skilled in the art to better understand the solutions of the present invention, the technical solutions in the embodiments of the present invention will be clearly and completely described below with reference to the accompanying drawings. Obviously, the described embodiments are only some rather than all of the embodiments of the present invention. Based on the embodiments of the present invention, all other embodiments obtained by those skilled in the art without creative efforts shall fall within the protection scope of the present invention.

It can be noted that the terms such as "first" and "second" in the description, claims, and drawings of the present invention are used to distinguish similar objects, and are not necessarily used to describe a specific order or sequence. It is to be understood that the data so used are interchangeable under appropriate circumstances so that the embodiments of the present invention described herein can be implemented in sequences other than those illustrated or described herein. In addition, the terms "comprise/include" and "have" and any variations thereof are intended to cover non-exclusive inclusions. For example, a process, a method, a system, a product, or a device including a series of steps or units is not necessarily limited to those steps or units explicitly listed, but may include other steps or units not explicitly listed or inherent to such process, method, product, or device.

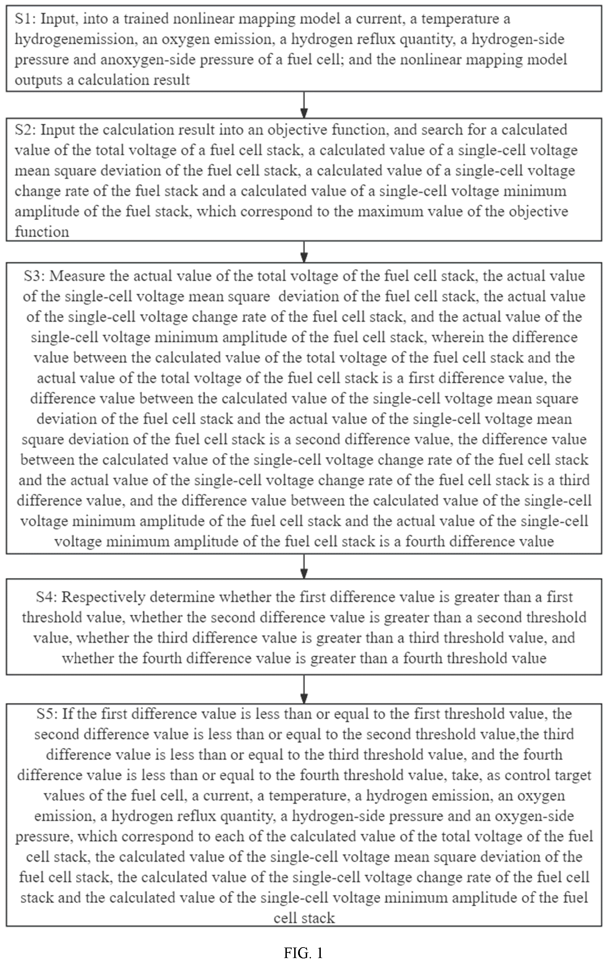

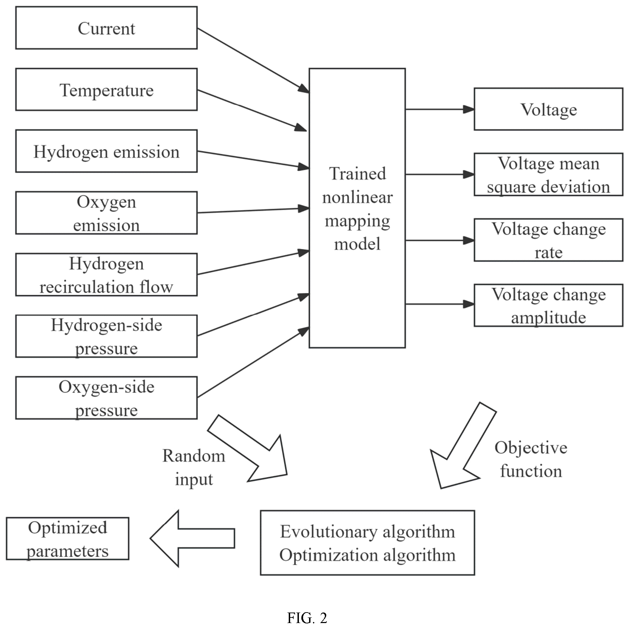

FIG. 1 is a schematic diagram of an embodiment of the method for intelligent management and control of fuel cell health provided by the present invention. FIG. 2 is a schematic diagram of another embodiment of the method for intelligent management and control of fuel cell health provided by the present invention. An embodiment of the method for intelligent management and control of fuel cell health provided by the present invention is described with reference to FIG. 1 and FIG. 2, including:

S1: Input values of current, temperature, hydrogen emission, oxygen emission, hydrogen recirculation flow, hydrogen-side pressure, and oxygen-side pressure of a fuel cell into a trained nonlinear mapping model, and then the trained nonlinear mapping model output a calculation result;
S2: Input the calculation result into an objective function, and determine, corresponding to the maximum value of the objective function, calculated values of a total voltage of a fuel cell stack, a single-cell voltage mean square deviation of the fuel cell stack, a single-cell voltage change rate of the fuel cell stack, and a single-cell voltage minimum amplitude of the fuel cell stack;
S3: Measure actual values of the total voltage of the fuel cell stack, the single-cell voltage mean square deviation of the fuel cell stack, the single-cell voltage change rate of the fuel cell stack, and the single-cell voltage minimum amplitude of the fuel cell stack, where a difference value between the calculated value and the actual value of the total voltage of the fuel cell stack is a first difference, a difference between the calculated value and the actual value of the single-cell voltage mean square deviation of the fuel cell stack is a second difference, a difference between the calculated value and the actual value of the single-cell voltage change rate of the fuel cell stack is a third difference, and a difference between the calculated value and the actual value of the single-cell voltage minimum amplitude of the fuel cell stack is a fourth difference;

S4: Respectively determine whether the first difference is greater than a first threshold, whether the second difference is greater than a second threshold, whether the third difference is greater than a third threshold, and whether the fourth difference is greater than a fourth threshold; and

S5: If the first difference is less than or equal to the first threshold, the second difference is less than or equal to the second threshold, the third difference is less than or equal to the third threshold, and the fourth difference is less than or equal to the fourth threshold, take, as control target values of the fuel cell, the current, the temperature, the hydrogen emission, the oxygen emission, the hydrogen recirculation flow, the hydrogen-side pressure, and the oxygen-side pressure corresponding to each of the calculated values of the total voltage of the fuel cell stack, the single-cell voltage mean square deviation of the fuel cell stack, the single-cell voltage change rate of the fuel cell stack, and the single-cell voltage minimum amplitude of the fuel cell stack.

It can be understood that the calculations output by the trained nonlinear mapping model are used as the objective function of an intelligent optimization algorithm by means of weighted sum, so as to guide the evolutionary algorithm to search for a better solution. The intelligent optimization algorithm adopts a differential evolutionary algorithm, and the input parameter combination corresponding to the maximum value of the objective function is ultimately calculated after iterations based on the evaluation of the objective function. Intelligent optimization algorithm is written using an embedded C method so that it can run in a single-chip microcomputer controller, calculate the input parameters with approximately optimal performance in real time, and use these input parameters as control parameters.

Compared with existing technologies, the method for intelligent management and control of fuel cell health provided by the present invention has at least the following advantages:

The method for intelligent management and control of fuel cell health provided in the present invention, targets the current corresponding to each of the calculated values of the total voltage of the fuel cell stack, the single-cell voltage mean square deviation of the fuel cell stack, the single-cell voltage change rate of the fuel cell stack, and the single-cell voltage minimum amplitude of the fuel cell stack, enabling the fuel cell to operate under reasonable working conditions to avoid faults such as "membrane drying" or "flooding" in the MEA of the fuel cell. When a decline in health or even a fault occurs, the optimization objectives are adjusted and operation conditions are modified, which target the optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack, enabling the MEA to reach a new "water balance" state, thereby improving fuel cell performance, reducing fuel cell faults, and enhancing the adaptability, reliability, and stability of the fuel cell system.

In some optional embodiments, with continued reference to FIG. 1 and FIG. 2, the objective function is calculated as follows:

$$Y = op1 \times A + (1/op2) \times B + (1/op3) \times C + (1/op4) \times D,$$

In the function, $op1$ represents the calculated value of the total voltage of the fuel cell stack, $A$ represents the first weight, $op2$ represents the calculated value of the single-cell voltage mean square deviation of the fuel cell stack, $B$ represents the second weight, $op3$ represents the calculated value of the single-cell voltage change rate of the fuel cell stack, $C$ represents the third weight, $op4$ represents the calculated value of the single-cell voltage minimum amplitude of the fuel cell stack, and $D$ represents the fourth weight.

It can be understood that the calculated value of the total voltage of the fuel cell stack is the sum of the single-cell voltages obtained form stack monitoring, the calculated value of the single-cell voltage mean square deviation of the fuel cell stack is the mean square deviation value of the single-cell voltages obtained from stack monitoring, the calculated value of the single-cell voltage change rate of the fuel cell stack is the change rate of the single-cell voltage amplitudes obtained from stack monitoring, and the calculated value of the single-cell voltage minimum amplitude of the fuel cell stack is the minimum amplitude of the single-cell voltages obtained from stack monitoring. These four parameters are used to express the water content of the fuel cell MEA.

The design of the differential evolutionary optimization algorithm prioritizes real-time performance while taking into account the optimization degree. The specific design of differential evolutionary optimization algorithm limits the population size to 20, the individual length to 3, the control parameter for mutation to 0.5, and the control parameter for crossover to 0.8, reducing the computational load to allow for rapid convergence of the algorithm. The results output by the trained nonlinear mapping model are subjected to weighted calculation according to the optimization objectives, serving as the final objective function of the differential evolutionary algorithm for participation in optimization calculations. Instead of using continuous random numbers directly, the input parameters are randomly selected from a limited array designed based on empirical methods and actual physical limitations of components for optimization calculation. Although this sacrifices some accuracy in finding the optimal solution, it achieves more critical real-time performance. Using the above algorithm, input parameters with approximately optimal performance are calculated in real-time based on the known parameter values, and these input parameters are used as the control inputs for the corresponding components of the control system. An actual control system can also be combined with empirical control methods to effectively eliminate the influence of system disturbances.

In some optional embodiments, with continued reference to FIG. 1 and FIG. 2, if the first difference is greater than the first threshold, adjust the first weight to a first optimized weight according to a fuzzy control algorithm;

If the second difference is greater than the second threshold, adjust the second weight to a second optimized weight according to the fuzzy control algorithm;

If the third difference is greater than the third threshold, adjust the third weight to a third optimized weight according to the fuzzy control algorithm; and

If the fourth difference is greater than the fourth threshold, adjust the fourth weight to the fourth optimized weight according to the fuzzy control algorithm.

It can be understood that a specific adjustment method is as follows:

The adjustment of the weights is calculated by means of a fuzzy control algorithm. Taking the calculated value of the total voltage of the fuel cell stack as an example, if the deviation between the calculated value and the actual value of the total voltage of the fuel cell stack exceeds the first threshold, it is considered that an abnormal operating condition has occurred, and the first weight in the objective function is increased. In the specific design of the fuzzy control algorithm for weight adjustment, the input is designed as the deviation between the optimization term and the design target value, and a membership function is defined according to the severity of the deviation. The membership function adopts the following division:

Input membership: Deviation $e=V_{set}-V$, where $V_{set}$ represents the calculated value of the total voltage of the fuel cell stack, and V represents the actual value of the total voltage of the fuel cell stack.

VH interval:

$$\text{if } e>12V \qquad \text{else} \qquad y=1;$$
$$\text{if } e>9V \text{ and } e<12 \qquad \text{else} \qquad y=(e-9)/3;$$

NH interval:

$$\text{if } e>9V \text{ and } e<12 \qquad \text{else} \qquad y=(12-e)/3;$$
$$\text{if } e>6V \text{ and } e<9 \qquad \text{else} \qquad y=(e-6)/3;$$

NM interval:

$$\text{if } e>6V \text{ and } e<9 \qquad \text{else} \qquad y=(9-e)/3;$$
$$\text{if } e>3V \text{ and } e<6 \qquad \text{else} \qquad y=(e-3)/3;$$

NL interval:

$$\text{if } e>3V \text{ and } e<6 \qquad \text{else} \qquad y=(6-e)/3;$$
$$\text{if } e>0V \text{ and } e<3 \qquad \text{else} \qquad y=e/3;$$

VL interval:

$$\text{if } e>0V \text{ and } e<3 \qquad \text{else} \qquad y=(3\text{-}e)/3;$$
$$\text{if } e<0V \qquad \text{else} \qquad y=1;$$

Output membership:
VB interval:

$$\text{if } e>2 \qquad \text{else} \qquad y=1;$$
$$\text{if } e>1.5 \text{ and } e<2 \qquad \text{else} \qquad y=(e\text{-}1.5)/0.5;$$

NB interval:

$$\text{if } e>1.5 \text{ and } e<2 \qquad \text{else} \qquad y=(2\text{-}e)/0.5;$$
$$\text{if } e>1 \text{ and } e<1.5 \qquad \text{else} \qquad y=(e\text{-}1)/0.5;$$

NS interval:

$$\text{if } e>1 \text{ and } e<1.5 \qquad \text{else} \qquad y=(1.5\text{-}e)/0.5;$$
$$\text{if } e>0.5 \text{ and } e<1 \qquad \text{else} \qquad y=(e\text{-}0.5)/0.5;$$

VS interval:

$$\text{if } e>0.5 \text{ and } e<1 \qquad \text{else} \qquad y=(1\text{-}e)/0.5;$$
$$\text{if } e<0.5 \qquad \text{else} \qquad y=1.$$

Specifically, the fuzzy control rule base is shown in Table 1, as follows:

Table 1 Fuzzy control rule base

|      | VS  | NS  | NB  | VB |
|------|-----|-----|-----|----|
| VH   | 0   | 0   | 0   | 1  |
| NH   | 0   | 0   | 1   | 0  |
| NM   | 0   | 0.5 | 0.5 | 0  |
| NL   | 0.5 | 0.5 | 0.5 | 0  |
| VL   | 1   | 0   | 0   | 0  |

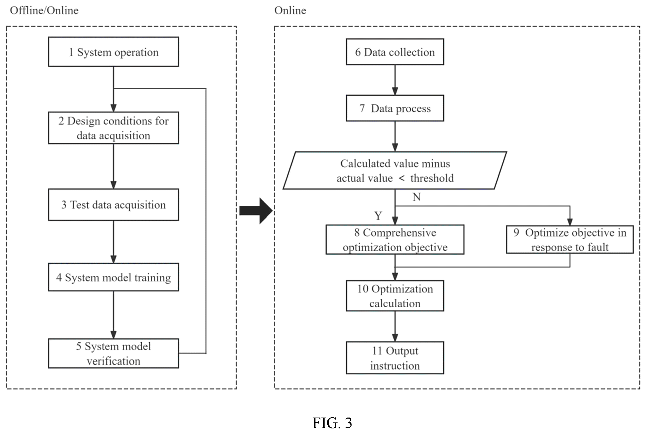

In some optional embodiments, with continued reference to FIG. 2 and FIG. 3, an optimization objective function is formed when at least one of the first weight, the second weight, the third weight, and the fourth weight of the objective function is changed.

The optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack corresponding to the maximum value of the optimization objective function are determined.

The current, the temperature, the hydrogen emission, the oxygen emission, the hydrogen recirculation flow, the hydrogen-side pressure, and the oxygen-side pressure, corresponding to each of the optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack, are taken as control target values of the fuel cell.

It can be understood that the optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack are calculated in real time. Based on these calculations, the corresponding current, temperature, hydrogen emission, oxygen emission, hydrogen recirculation flow, hydrogen-side pressure, and oxygen-side pressure are used as the control target values of the fuel cell, controlling the control inputs of the corresponding components to guide the corresponding actuators, such as DC-DC converter, electronic thermostat, tail exhaust solenoid valve, hydrogen recirculation pump, hydrogen proportional valve, and oxygen proportional valve, thereby achieving the aforesaid optimized values. An actual control system can also be combined with empirical control methods to effectively eliminate the influence of system disturbances.

FIG. 3 is a schematic flow diagram of yet another embodiment of the method for intelligent management and control of fuel cell health provided by the present invention. In some optional embodiments, with reference to FIG. 1, FIG. 2 and FIG. 3, the nonlinear mapping model includes an input layer, an intermediate layer, and an output layer connected in sequence. Furthermore, the intermediate layer includes a plurality of neurons, and the intermediate layer is connected to a hidden layer.

The nonlinear mapping model is trained as follows:

A data set is provided;

The data set is normalized to obtain a processed data set; and

The processed data set is input into the nonlinear mapping model, and the trained nonlinear mapping model is obtained after a preset number of iterations.

A weight update learning rate of the input layer ranges from 0.2 to 0.3, the weight update learning rate of the output layer ranges from 0.2 to 0.4, and the weight update learning rate of the hidden layer ranges from 0.1 to 0.2.

It can be understood that the design of the input and output parameters and the model establishment prioritize accuracy, and the input parameters have a very significant impact on the performance of fuel cells. The input samples are normalized, and the weights are initialized randomly. The intermediate layer adopts 15 neurons and consists of two parts: one part is obtained through weighted calculation from input the layer, and the other is part is obtained through weighted calculation from the hidden layer. The intermediate layer output is calculated by the activation function of Sigmoid ( ) and enters the output layer. The output layer is designed to include the total voltage of the fuel cell stack, the single-cell voltage mean square deviation of the fuel cell stack, the single-cell voltage change rate of the fuel cell stack, and the single-cell voltage minimum amplitude of the fuel cell stack. Finally, the weights of each layer are updated, and partial derivatives are calculated for the weights of each layer to perform an optimization, achieving convergence after iterations.

Specifically, during the training process, the input samples for the nonlinear mapping model are arrays of parameters. The number of input variables for each sample is 7, the number of samples is 1000, and the number of output variables for each sample is 4. The input parameters are calculated through the weights of the input layer to obtain the neurons in the intermediate layer, with a number of 15. The neurons in the intermediate layer are weighted to obtain the neurons in recurrent layer for storing historical information. The recurrent layer and the intermediate layer undergo the activation function to obtain the output layer. Then, a reverse partial derivative calculation is performed on each layer to update the weight. Iterative training is carried out in this manner for 5000 times, or the iteration ends when the deviation is less than or equal to 1%. The weight update learning rate of the input layer ranges from 0.2 to 0.3, the weight update learning rate of the output layer ranges from 0.2 to 0.4, and the weight update learning rate of the hidden layer ranges from 0.1 to 0.2, with bias added. The input variables for the big data samples are the operating data of the fuel cell system, which are the current, temperature, hydrogen emission, oxygen emission, hydrogen recirculation flow, hydrogen-side pressure, and oxygen-side pressure of the fuel cell. These parameters all affect, to a certain extent, the changes in water content of the fuel cell MEA. After modeling through the nonlinear mapping model and optimization calculations, the optimal input parameters are selected as the control target values of the control system. Modeling calculation and verification can be implemented using either offline or online modes. The data used are actual system operating data, with data being read every 10 seconds. When actually selecting data, various representative data are considered, including power rise data, power decrease data, temperature rise data, temperature decrease data, high utilization rate operating conditions, low utilization rate operating conditions, and low-, medium- and high-pressure operating conditions.

The serial numbers of the above embodiments of the present invention are only for description and do not represent the superiority or inferiority of the embodiments.

In the above embodiments of the present invention, the description of each embodiment has its own emphasis. For parts not described in detail in an embodiment, reference may be made to the relevant descriptions of other embodiments.

Finally, it should be noted that the above embodiments are only used to illustrate the technical solutions of the present invention, but not to limit them. Although the present invention has been described in detail with reference to the foregoing embodiments, those ordinarily skilled in the art should understand that: the technical solutions described in the foregoing embodiments can still be modified, or some or all of the technical features thereof can be equivalently replaced; and these modifications or replacements do not make the essence of the corresponding technical solutions deviate from the scope of the technical solutions of the embodiments of the present invention.

**Claims**

1. A method for intelligent management and control of fuel cell health, **characterized by** comprising:

   inputting values of current, temperature, hydrogen emission, oxygen emission, hydrogen recirculation flow, hydrogen-side pressure, and oxygen-side pressure of a fuel cell into a trained nonlinear mapping model, and then the trained nonlinear mapping model outputting a calculation result;
   inputting the calculation result into an objective function, and determining, corresponding to the maximum value of the objective function, calculated values of a total voltage of a fuel cell stack, a single-cell voltage mean square deviation of the fuel cell stack, a single-cell voltage change rate of the fuel cell stack, and a single-cell voltage minimum amplitude of the fuel cell stack;
   measuring actual values of the total voltage of the fuel cell stack, the single-cell voltage mean square deviation of the fuel cell stack, the single-cell voltage change rate of the fuel cell stack, and the single-cell voltage minimum amplitude of the fuel cell stack, wherein a difference between the calculated value and the actual value of the total voltage of the fuel cell stack is a first difference, a difference between the calculated value and the actual value of the single-cell voltage mean square deviation of the fuel cell stack is a second difference, a difference between the calculated value and the actual value of the single-cell voltage change rate of the fuel cell stack is a third difference, and a difference between the calculated value and the actual value of the single-cell voltage minimum amplitude of the fuel cell stack is a fourth difference;
   respectively determining whether the first difference is greater than a first threshold, whether the second difference is greater than a second threshold, whether the third difference is greater than a third threshold, and whether the fourth difference is greater than a fourth threshold; and
   if the first difference is less than or equal to the first threshold, the second difference is less than or equal to the second threshold, the third difference is less than or equal to the third threshold, and the fourth difference is less than or equal to the fourth threshold, taking, as control target values of the fuel cell, the current, the temperature, the hydrogen emission, the oxygen emission, the hydrogen recirculation flow, the hydrogen-side pressure, and the oxygen-side pressure corresponding to the calculated values of the total voltage of the fuel cell stack, the single-cell voltage mean square deviation of the fuel cell stack, the single-cell voltage change rate of the fuel cell stack, and the single-cell voltage minimum amplitude of the fuel cell stack.

2. The method for intelligent management and control of fuel cell health according to claim 1, **characterized in that** the objective function satisfies:

$$Y = op1 \times A + (1/op2) \times B + (1/op3) \times C + (1/op4) \times D$$

   wherein, *op1* represents the calculated value of the total voltage of the fuel cell stack, *A* represents a first weight, *op2* represents the calculated value of the single-cell voltage mean square deviation of the fuel cell stack, *B* represents a second weight, *op3* represents the calculated value of the single-cell voltage change rate of the fuel cell stack, C represents a third weight, *op4* represents the calculated value of the single-cell voltage minimum amplitude of the fuel cell stack, and *D* represents a fourth weight.

3. The method for intelligent management and control of fuel cell health according to claim 2, **characterized in that**

   if the first difference is greater than the first threshold, adjust the first weight to a first optimized weight according to a fuzzy control algorithm;

if the second difference is greater than the second threshold, adjust the second weight to a second optimized weight according to the fuzzy control algorithm;

if the third difference is greater than the third threshold, adjust the third weight to a third optimized weight according to the fuzzy control algorithm; and

if the fourth difference is greater than the fourth threshold, adjust the fourth weight to a fourth optimized weight according to the fuzzy control algorithm.

4. The method for intelligent management and control of fuel cell health according to claim 3, **characterized in that** an optimization objective function is formed when at least one of the first weight, the second weight, the third weight, and the fourth weight of the objective function is changed;

determine optimized values of the total voltage of the fuel cell stack, the single-cell voltage mean square deviation of the fuel cell stack, the single-cell voltage change rate of the fuel cell stack, and the single-cell voltage minimum amplitude of the fuel cell stack corresponding to the maximum value of the optimization objective function; and take, as control target values of the fuel cell, the current, the temperature, the hydrogen emission, the oxygen emission, the hydrogen recirculation flow, the hydrogen-side pressure, and the oxygen-side pressure corresponding to each of the optimized values of the total voltage of the fuel cell stack, the single-cell voltage mean square deviation of the fuel cell stack, the single-cell voltage change rate of the fuel cell stack, and the optimized value of the single-cell voltage minimum amplitude of the fuel cell stack.

5. The method for intelligent management and control of fuel cell health according to claim 1, **characterized in that** the nonlinear mapping model comprises an input layer, an intermediate layer, and an output layer connected in sequence, wherein the intermediate layer comprises a plurality of neurons and is connected to a hidden layer.

6. The method for intelligent management and control of fuel cell health according to claim 5, **characterized in that** the training of the nonlinear mapping model comprises:

providing a data set;
normalizing the data set to obtain a processed data set; and
inputting the processed data set into the nonlinear mapping model, and obtaining the trained nonlinear mapping model after a preset number of iterations.

7. The method for intelligent management and control of fuel cell health according to claim 5 or claim 6, **characterized in that** a weight update learning rate of the input layer ranges from 0.2 to 0.3, a weight update learning rate of the output layer ranges from 0.2 to 0.4, and a weight update learning rate of the hidden layer ranges from 0.1 to 0.2.

S1: Input, into a trained nonlinear mapping model a current, a temperature a hydrogenemission, an oxygen emission, a hydrogen reflux quantity, a hydrogen-side pressure and anoxygen-side pressure of a fuel cell; and the nonlinear mapping model outputs a calculation result

S2: Input the calculation result into an objective function, and search for a calculated value of the total voltage of a fuel cell stack, a calculated value of a single-cell voltage mean square deviation of the fuel cell stack, a calculated value of a single-cell voltage change rate of the fuel stack and a calculated value of a single-cell voltage minimum amplitude of the fuel stack, which correspond to the maximum value of the objective function

S3: Measure the actual value of the total voltage of the fuel cell stack, the actual value of the single-cell voltage mean square deviation of the fuel cell stack, the actual value of the single-cell voltage change rate of the fuel cell stack, and the actual value of the single-cell voltage minimum amplitude of the fuel cell stack, wherein the difference value between the calculated value of the total voltage of the fuel cell stack and the actual value of the total voltage of the fuel cell stack is a first difference value, the difference value between the calculated value of the single-cell voltage mean square deviation of the fuel cell stack and the actual value of the single-cell voltage mean square deviation of the fuel cell stack is a second difference value, the difference value between the calculated value of the single-cell voltage change rate of the fuel cell stack and the actual value of the single-cell voltage change rate of the fuel cell stack is a third difference value, and the difference value between the calculated value of the single-cell voltage minimum amplitude of the fuel cell stack and the actual value of the single-cell voltage minimum amplitude of the fuel cell stack is a fourth difference value

S4: Respectively determine whether the first difference value is greater than a first threshold value, whether the second difference value is greater than a second threshold value, whether the third difference value is greater than a third threshold value, and whether the fourth difference value is greater than a fourth threshold value

S5: If the first difference value is less than or equal to the first threshold value, the second difference value is less than or equal to the second threshold value,the third difference value is less than or equal to the third threshold value, and the fourth difference value is less than or equal to the fourth threshold value, take, as control target values of the fuel cell, a current, a temperature, a hydrogen emission, an oxygen emission, a hydrogen reflux quantity, a hydrogen-side pressure and an oxygen-side pressure, which correspond to each of the calculated value of the total voltage of the fuel cell stack, the calculated value of the single-cell voltage mean square deviation of the fuel cell stack, the calculated value of the single-cell voltage change rate of the fuel cell stack and the calculated value of the single-cell voltage minimum amplitude of the fuel cell stack

FIG. 1

FIG. 2

Offline/Online

Online

1 System operation

2 Design conditions for data acquisition

3 Test data acquisition

4 System model training

5 System model verification

6 Data collection

7 Data process

Calculated value minus actual value < threshold

N

Y

8 Comprehensive optimization objective

9 Optimize objective in response to fault

10 Optimization calculation

11 Output instruction

FIG. 3

## INTERNATIONAL SEARCH REPORT

| International application No. |
| --- |
| **PCT/CN2024/121023** |

| A. | CLASSIFICATION OF SUBJECT MATTER |
| --- | --- |

H01M8/04992(2016.01)i;  H01M8/04298(2016.01)i;  H01M8/04858(2016.01)i;  H01M8/04701(2016.01)i;
H01M8/04746(2016.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, VEN, ENTXTC, WPABSC, DWPI, CNKI: 电堆, 目标函数, 非线性, 线性, 模型, 电流, 电压, 幅值, 回流, 健康, 均方差, 排量, 氢, 燃料电池, 温度, 阈值, 氧, fuel, cell, health, management, non-linear, current, temperature, hydrogen, oxygen, reflux, galvanic, voltage, calculation, threshold, galvanic, pile, target, function, pressure

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117199460 A (DALIAN INSTITUTE OF CHEMICAL PHYSICS, CHINESE ACADEMY OF SCIENCES) 08 December 2023 (2023-12-08) claims 1-7 | 1-7 |
| A | CN 115566233 A (HYDROGEN (SHANGHAI) NEW ENERGY TECHNOLOGY CO., LTD.) 03 January 2023 (2023-01-03) description, paragraphs 0007-0049, and figures 1-6 | 1-7 |
| A | CN 114976130 A (CHINA FAW GROUP CO., LTD.) 30 August 2022 (2022-08-30) entire document | 1-7 |
| A | CN 115498217 A (TSINGHUA UNIVERSITY) 20 December 2022 (2022-12-20) entire document | 1-7 |
| A | CN 115600491 A (SUNRISE POWER CO., LTD.) 13 January 2023 (2023-01-13) entire document | 1-7 |
| A | KR 102169040 B1 (GL HOLDINGS CO., LTD.) 22 October 2020 (2020-10-22) entire document | 1-7 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 November 2024** | **31 December 2024** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/121023** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2003215677 A1 (PLUG POWER INC.) 20 November 2003 (2003-11-20)<br>entire document | 1-7 |

Form PCT/ISA/210 (second sheet) (July 2022)

**INTERNATIONAL SEARCH REPORT**
Information on patent family members

International application No.

**PCT/CN2024/121023**

| Patent document cited in search report | | | Publication date (day/month/year) | Patent family member(s) | | | Publication date (day/month/year) |
|---|---|---|---|---|---|---|---|
| CN | 117199460 | A | 08 December 2023 | None | | | |
| CN | 115566233 | A | 03 January 2023 | None | | | |
| CN | 114976130 | A | 30 August 2022 | None | | | |
| CN | 115498217 | A | 20 December 2022 | None | | | |
| CN | 115600491 | A | 13 January 2023 | None | | | |
| KR | 102169040 | B1 | 22 October 2020 | None | | | |
| US | 2003215677 | A1 | 20 November 2003 | US | 7222001 | B2 | 22 May 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112117475 A

- CN 114976133 A